(19) Europäisches Patentamt
European Patent Office
Office européen des brevets

(11) Veröffentlichungsnummer: **0 096 737**
**B1**

(12) # EUROPÄISCHE PATENTSCHRIFT

(45) Veröffentlichungstag der Patentschrift: **04.06.86**

(51) Int. Cl.⁴: **C 08 J 3/02**, C 08 G 59/58, C 04 B 24/28

(21) Anmeldenummer: **83103838.5**

(22) Anmeldetag: **20.04.83**

(54) **Emulsion auf der Basis Epoxidharz/Polyammoniumsalz und Verfahren zu ihrer Herstellung.**

(30) Priorität: **16.06.82 DE 3222528**

(43) Veröffentlichungstag der Anmeldung: **28.12.83 Patentblatt 83/52**

(45) Bekanntmachung des Hinweises auf die Patenterteilung: **04.06.86 Patentblatt 86/23**

(84) Benannte Vertragsstaaten: **AT BE CH DE FR GB IT LI NL SE**

(56) Entgegenhaltungen:
**EP - A - 0 005 617**
**GB - A - 1 244 424**
**US - A - 3 129 133**
**US - A - 3 926 886**

**CHEMICAL ABSTRACTS, Band 80, 1974, Seite 44, Nr. 121894e, Columbus, Ohio, USA**
**CHEMICAL ABSTRACTS, Band 85, Nr. 18, November 1976, Seite 56, Nr. 125149s, Columbus, Ohio, USA**

(73) Patentinhaber: **HÜLS AKTIENGESELLSCHAFT, Patentabteilung / PB 15 - Postfach 13 20, D-4370 Marl 1 (DE)**

(72) Erfinder: **Weiss, Jörn-Volker, Dr., Im Hadkamp 1, D-4358 Haltern 3 (DE)**
Erfinder: **Riemer, Heinz, Dr., Fritz-Reuter-Strasse 15, D-4250 Bottrop 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

1. Epoxidharze sind aufgrund ihrer Eigenschaften ein im Bausektor vielseitig verwendbarer Werkstoff (vgl. z. B. Saechtling, «Bauen mit Kunststoffen», Carl-Hanser-Verlag, München, 1973). Neben den reinen Epoxidharz-Mörteln, die z. B. für Beschichtungen und Haftbrücken eingesetzt werden, bieten sich auch für Epoxidharz-Zementmörtel wegen ihrer guten Haftfestigkeit, des guten Schwindverhaltens und ihres Wasserrückhaltevermögens im Bauwesen interessante Anwendungsmöglichkeiten.

Wesentliche Voraussetzung für die Verarbeitung von Epoxidharzen ist, dass Harz und Härter unter den am Bau herrschenden Witterungsbedingungen in angemessener Zeit weitgehend vollständig miteinander reagieren.

Das in der DE-A-2840874 beschriebene Bindemittelgemisch, das aus einem hydraulischen Binder, einem Epoxidharz, dem Addukt aus einem Polyamin und einer Epoxidverbindung, Wasser und gegebenenfalls Reaktivverdünnern, Pigmenten und weiteren Hilfsstoffen besteht, ist besonders für die Sanierung von schadhaften Stahlbetonteilen geeignet, da die Anwendung eines Korrosionsschutzprimers mit diesem Gemisch entbehrlich wird.

Der Nachteil dieses 2-Komponenten-Systems besteht darin, dass es wegen seiner begrenzten Haltbarkeit auf dem Bau hergestellt und innerhalb einer relativ kurzen Zeitspanne (ca. eine halbe Stunde) verarbeitet werden muss. Es ist bekannt, dass das Verhältnis des Härters zum Epoxidharz von entscheidender Bedeutung ist. Das zitierte Verfahren, bei dem es auf eine schnelle und sehr sorgfältige Durchmischung ankommt, wenn nicht Qualitätseinbussen hingenommen werden sollen, weist daher in der Praxis Nachteile auf.

Günstiger ist es, entsprechend der US-A-3926886, von einer Epoxidharz-Diammoniumacetat- oder -formiat-Emulsion auszugehen, die aus einem flüssigen Epoxidharz, Wasser und einem substituierten Diammoniumsalz besteht, und in Gegenwart von Zement eine Härtung durchzuführen.

Das Diammoniumsalz soll bei diesem Verfahren eine doppelte Funktion einnehmen: einmal soll es nach Reaktion mit dem alkalisch wirkenden Zement das zugrundeliegende Diamin freisetzen, das dann das Epoxidharz aushärtet, zum anderen soll es die Funktion eines Emulgators wahrnehmen. Die Stabilität der auf diese Weise erhaltenen Emulsion ist jedoch nicht gewährleistet, insbesondere dann nicht, wenn unter extremen Witterungsbedingungen gearbeitet werden muss. Daher wird bereits in der US-PS 3926886 vorgeschlagen, der Mischung bis zu 15% eines handelsüblichen Emulgators zuzusetzen. Indessen bleibt auch nach solchen Zusätzen die Stabilität der Emulsion eine kritische Grösse.

Unbefriedigend ist ferner, dass als Aminkomponente nur bestimmte ethergruppenhaltige Diamine der Formel

$$R_1–O–R_2–NH–R_3–NH_2$$

geeignet sind, wobei $R_1$ ein Alkylrest mit mindestens 8 C-Atomen und $R_2$ und $R_3$ niedere Alkylenreste mit 2 bis 4 C-Atomen darstellen. Es wäre demgegenüber wünschenswert, leichter zugängliche Polyamine und deren Kondensationsprodukte zur Herstellung von Emulsionen einzusetzen. Polyamine, wie z. B. Diethylentriamin, sind aber – im Gegensatz zu den Diaminen der US-PS 3926886 – in jedem Verhältnis mit Wasser mischbar. Ihre Formiate und Acetate sind mit den üblichen Emulgatoren, wie z. B. Fettalkoholoxethylaten, Alkylsulfonaten oder Phosphorsäurehalbestern, nicht emulgierbar. Andererseits sind nur homogene stabile Emulsionen in der Lage, in gleichmässiger Qualität eine Kaltaushärtung der eingesetzten flüssigen Epoxidverbindungen zu gewährleisten.

Es bestand nun die Aufgabe dieser Erfindung darin, Formulierungen auf der Basis von Polyaminen zu entwickeln, die stabile wässrige Epoxidharz-Polyammoniumsalz-Emulsionen ergeben.

Diese Aufgabe wurde mit Emulsionen gelöst, die folgende Komponenten enthalten:

1. ein flüssiges Epoxidharz,
2. einen primären aliphatischen Alkohol mit 12 bis 14 C-Atomen, dessen Addukt mit bis zu 5 Ethylenoxidgruppen oder einen Carbonsäurepolyglykolester,
3. das Reaktionsprodukt, das man durch vollständige Neutralisation von Oxalsäure mit einem Polyamin der Formel

$$H_2N–(CH_2–CH_2–NH)_x–H \text{ mit } x = 2, 3 \text{ und } 4$$

oder einem aminogruppenhaltigen Reaktionsprodukt erhält, das durch Umsetzung dieses Polyamins mit Fettsäuren zugänglich ist, und

4. Wasser.

Es sei ausdrücklich darauf hingewiesen, dass unter Emulsionen im Rahmen dieser Anmeldung nicht nur die 2-Phasen-Systeme gemeint sein sollen, die durch Dispersion einer flüssigen Phase in einer anderen flüssigen Phase entstanden sind, sondern auch jene Systeme, in denen eine feste Phase in einer flüssigen Phase dispergiert ist sowie alle Übergänge dieser beiden Systeme.

Gegenstand der Erfindung ist ferner das Verfahren zur Herstellung dieser Emulsionen sowie deren Verwendung.

Die Aminkomponente soll also nicht, wie dies beispielsweise in der EP-A1-0043463 beschrieben ist, mit Epoxidharz bei erhöhter Temperatur zu Addukten reagieren, die durch Zusätze von Säure wasserlöslich und dispergierbar gemacht werden, vielmehr geht es hier darum, eine Emulsion aus einem Polyammoniumsalz und einem Epoxidharz herzustellen, bei der erst nach Zusatz eines alkalisch reagierenden Stoffes der Aushärtungsprozess eingeleitet wird.

Die Emulsionen können in Epoxidharz-Mörteln wie auch in Epoxidharz-Zementmörteln zum Einsatz kommen. Sie eignen sich ferner zur Versiegelung von Frischbetonflächen, um das Wasserrückhaltevermögen des Betons zu verbessern.

Die Aminokomponente des latenten Härters kann entweder

I. ein Polyamin, wie z. B. Diethylentriamin (DETA), Triethylentetramin (TETA) und Tetraethylenpentamin (TEPA), oder

II. das Reaktionsprodukt sein, das man durch Umsetzung der genannten Polyamine mit einer unterstöchiometrischen Menge von Fettsäuren erhält. Üblicherweise geht man von dimerisierten ungesättigten Fettsäuren, beispielsweise Linolsäure, aus. Derartige Produkte enthalten neben den reaktiven Aminogruppen Amidgruppen und vielfach auch Imidazolin-Einheiten (vgl. auch H. Lee, C. Neville «Handbook of Epoxy Resins» Mc Graw Hill, New York, S. 10–2ff). Die genaue chemische Struktur der im Handel erhältlichen Produkte, wie z. B. Versamid® 125 (vgl. DE-A-2262791) und Versamid® 140 sowie Euredur® 250 der Fa. Schering, Berlin, ist nicht bekannt.

Die Menge der Aminokomponente richtet sich nach den Angaben des Epoxidharzherstellers, z. B. dem Epoxidwert des eingesetzten Epoxidharzes oder dem angegebenen Mischungsverhältnis von Harz und Härter.

Die Oxalsäure kann bis zu 15 Gew.-% durch Weinsäure ersetzt werden. Geht man von aminogruppenhaltigen Reaktionsprodukten aus, die durch Umsetzung von Polyaminen mit Fettsäuren erhalten wurden, kann man die Oxalsäure bis zu 60 Gew.-% durch Weinsäure oder Essigsäure ersetzen.

Als Emulgatoren werden endständige Alkohole mit 12 bis 14 C-Atomen sowie deren Gemische eingesetzt. Geeignet sind auch die Addukte dieser Alkohole mit bis zu 5 Ethylenoxidgruppen. Bevorzugt werden Laurylalkohol und Lauryltriglykol eingesetzt. Daneben können auch Carbonsäurepolyglykolester, d. h. die Ester von aliphatischen $C_{10}$–$C_{22}$-, insbesondere $C_{18}$-Carbonsäuren mit Polyglykolen, beispielsweise auf der Basis von Ethylenoxid, in vorteilhafter Weise eingesetzt werden. Besonders geeignet ist das Produkt Marlowet®EF der Chemischen Werke Hüls AG. Bezogen auf die eingesetzte Menge an Epoxidharz haben sich Emulgatorzusätze von 10 bis 20% bewährt.

Die zur Kaltaushärtung geeigneten flüssigen Epoxidverbindungen sind vorwiegend Umsetzungsprodukte von Epichlorhydrin oder Glycidol mit 2,2-Bis(4-hydroxyphenyl)alkanen. Die präzise chemische Struktur der im Handel erhältlichen Epoxidharze, wie z. B. Epoxidharz Eurepox® XE 756 der Firma Schering, Berlin, oder Epoxidharz Rütapox® VE 2913 der Firma Bakelite GmbH, Duisburg, ist unbekannt.

Die Herstellung der Emulsionen erfolgt zweckmässigerweise so, dass man zunächst die vorgesehene Menge Säure in Wasser löst. Anschliessend gibt man unter Rühren das Polyamin zu, bis die Lösung neutral reagiert. Bei starker Reaktionswärme empfiehlt sich die Kühlung des Reaktionsgemisches.

Die für die Emulsion notwendige Wassermenge hängt im wesentlichen von der Art der Aminokomponente ab. Bei den Polyaminen liegt die Wassermenge zwischen 30 und 75%, bei den Umsetzungsprodukten dieser Polyamine mit Fettsäuren zwischen 200 und 350%, jeweils bezogen auf die vorgesehene Menge Epoxidharz. Die optimale Wassermenge kann durch Vergleichsversuche leicht ermittelt werden.

Das Einbringen des Emulgators erfolgt anschliessend unter Rühren bei Raumtemperatur. In das Gemisch wird dann ebenfalls bei Raumtemperatur unter schnellem Rühren das Epoxidharz langsam hinzugegeben. Nach beendeter Zugabe wird noch 0,5 bis 1,0 Stunden nachgerührt. Es werden so Emulsionen erhalten, die bei Raumtemperatur über Wochen bzw. Monate stabil sind. Beim Auftreten einer Phasentrennung lassen sich die Mischungen durch erneutes Rühren schnell wieder homogenisieren.

a) Herstellung der Emulsionen

(Die Mengenangaben der Oxalsäure beziehen sich stets auf das Dihydrat.)

Beispiel 1

In einem Standkolben mit Magnetrührer wurden 14 Gewichtsteile Wasser mit 4,6 Gewichtsteilen Oxalsäure vorgelegt. Zu dieser Lösung wurden unter Rühren 2,7 Gewichtsteile TETA gegeben. Nach dem Abkühlen der Reaktionsmischung auf Raumtemperatur wurden 2 Gewichtsteile Laurylalkohol und 1 Gewichtsteil Lauryltriglykol in die Mischung eingerührt. Anschliessend wurden unter schnellem Rühren (ca. 1000 U/min) 20 Gewichtsteile Epoxidharz Rütapox® VE 2913 langsam zu der Mischung gegeben. Anschliessend wurde noch 1 h mit gleicher Rührerdrehzahl nachgerührt.

Vergleichsbeispiel A

Es wurde wie in Beispiel 1 verfahren; nur erfolgte die Neutralisation des TETA ausschliesslich mit 4,0 Gewichtsteilen Essigsäure. Die erhaltene Emulsion zersetzte sich bereits nach wenigen Minuten.

Beispiel 2

Aus 8 Gewichtsteilen Wasser, 3,9 Gewichtsteilen Oxalsäure, 2,3 Gewichtsteilen DETA, 4,0 Gewichtsteilen Marlowet® EF und 20 Gewichtsteilen Epoxidharz Rütapox® VE 2913 wurde, wie in Beispiel 1 beschrieben, eine Emulsion hergestellt.

Beispiel 3

Aus 7 Gewichtsteilen Wasser, 3,5 Gewichtsteilen Oxalsäure, 0,7 Gewichtsteilen Weinsäure, 2,3 Gewichtsteilen DETA, 3,0 Gewichtsteilen Marlowet® EF und 20 Gewichtsteilen Epoxidharz Rütapox® VE 2913 wurde, wie in Beispiel 1 beschrieben, eine Emulsion hergestellt.

Beispiel 4

Aus 12 Gewichtsteilen Wasser, 4,6 Gewichtsteilen Oxalsäure, 2,7 Gewichtsteilen TETA, 2 Gewichtsteilen Laurylalkohol und 20 Gewichtsteilen Epoxidharz Rütapox® VE 2913 wurde, wie in Beispiel 1 beschrieben, eine Emulsion hergestellt.

Vergleichsbeispiel B

Es wurde wie in Beispiel 4 verfahren; nur erfolgte die Neutralisation ausschliesslich mit 2,9 Gewichtsteilen Ameisensäure. Die erhaltene Emulsion zersetzte sich bereits nach wenigen Minuten.

Beispiel 5

Aus 50 Gewichtsteilen Wasser, 1,8 Gewichtsteilen Oxalsäure, 2,5 Gewichtsteilen Essigsäure, 10 Gewichtsteilen Versamid® 140, 2,0 Gewichtsteilen Laurylalkohol und 20 Gewichtsteilen Epoxidharz Rütapox® VE 2913 wurde, wie in Beispiel 1 beschrieben, eine Emulsion hergestellt.

Vergleichsbeispiel C

Es wurde wie in Beispiel 5 verfahren; nur erfolgte die Neutralisation ausschliesslich mit 4,3 Gewichtsteilen Essigsäure. Die erhaltene Emulsion zersetzte sich bereits nach einer Stunde.

Beispiel 6

Aus 50 Gewichtsteilen Wasser, 2,3 Gewichtsteilen Oxalsäure, 2,5 Gewichtsteilen Weinsäure, 10 Gewichtsteilen Versamid® 140, 2,0 Gewichtsteilen Laurylalkohol und 20 Gewichtsteilen Epoxidharz Rütapox® VE 2913 wurde, wie in Beispiel 1 beschrieben, eine Emulsion hergestellt.

Beispiel 7

Aus 65 Gewichtsteilen Wasser, 1,8 Gewichtsteilen Oxalsäure, 2,5 Gewichtsteilen Essigäure, 10 Gewichtsteilen Versamid® 140, 2 Gewichtsteilen Laurylalkohol und 20 Gewichtsteilen Epoxidharz Rütapox® VE 2913 wurde, wie in Beispiel 1 beschrieben, eine Emulsion hergestellt.

Beispiel 8

Aus 55 Gewichtsteilen Wasser, 1,6 Gewichtsteilen Oxalsäure, 2,3 Gewichtsteilen Essigsäure, 10,2 Gewichtsteilen Eurodur® 250, 2,0 Gewichtsteilen Laurylalkohol und 20 Gewichtsteilen Epoxidharz Rütapox® VE 2913 wurde, wie in Beispiel 1 beschrieben, eine Emulsion hergestellt.

Beispiel 9

Aus 65 Gewichtsteilen Wasser, 2,5 Gewichtsteilen Oxalsäure, 3,1 Gewichtsteilen Essigsäure, 17,8 Gewichtsteilen Versamid® 125, 2,0 Gewichtsteilen Laurylalkohol und 20 Gewichtsteilen Epoxidharz Rütapox® VE 2913 wurde, wie in Beispiel 1 beschrieben, eine Emulsion hergestellt.

b) Herstellung von Epoxidharz-Mörteln

Beispiel 10

40 Gewichtsteile Sand 0/1 mm wurden mit 12 Gewichtsteilen der in Beispiel 2 beschriebenen Emulsion gemischt. In die erhaltene Masse wurden 2,5 Gewichtsteile Calciumhydroxid eingearbeitet. Der erhaltene Mörtel härtete innerhalb von 24 h bei einer Temperatur von 23°C zu einer festen, klebfreien Masse aus.

Beispiel 11

Wie in Beispiel 10 beschrieben, wurde aus 40 Gewichtsteilen Sand 0/1 mm, 20 Gewichtsteilen der in Beispiel 6 beschriebenen Emulsion und 1,5 Gewichtsteilen Calciumhydroxid ein Epoxidharz-Mörtel hergestellt.

Beispiel 12

Wie in Beispiel 10 beschrieben, wurde aus 40 Gewichtsteilen Sand 0/1 mm, 12 Gewichtsteilen der in Beispiel 4 beschriebenen Emulsion und 2,5 Gewichtsteilen Calciumhydroxid ein Epoxidharz-Mörtel hergestellt.

**Patentansprüche**

1. Epoxidharz-Polyammoniumsalz-Emulsion auf Basis eines flüssigen Epoxidharzes, eines latenten Härters, eines Emulgators und Wasser, dadurch gekennzeichnet, dass

a) der Emulgator einen primären aliphatischen Alkohol mit 12 bis 14 C-Atomen, dessen Addukt mit bis zu 5 Ethylenoxidgruppen oder einen Carbonsäurepolyglykolester darstellt, und

b) der latente Härter das Reaktionsprodukt darstellt, das man durch vollständige Neutralisation von Oxalsäure mit einem Polyamin der Formel

$$H_2N\text{–}(CH_2\text{–}CH_2\text{–}BH)\text{–}_xH \text{mit } x = 2{,}3 \text{ und } 4$$

oder mit einem aminogruppenhaltigen Reaktionsprodukt erhält, das durch Umsetzung dieses Polyamins mit Fettsäuren zugänglich ist.

2. Epoxidharz-Polyammoniumsalz-Emulsion gemäss Anspruch 1, dadurch gekennzeichnet, dass man die Oxalsäure bis zu 15 Gew.-% durch Weinsäure ersetzt.

3. Epoxidharz-Polyammoniumsalz-Emulsion auf der Basis eines aminogruppenhaltigen Reaktionsprodukts, das man durch Umsetzung eines Polyamins der Formel

$$H_2N\text{–}(CH_2\text{–}CH_2\text{–}BH)\text{–}_xH \text{ mit } x = 2{,}3 \text{ und } 4$$

mit Fettsäuren gemäss Anspruch 1 erhält, dadurch gekennzeichnet, dass man die Oxalsäure bis zu 60 Gew.-% durch Weinsäure oder Essigsäure ersetzt.

4. Verfahren zur Herstellung einer Epoxidharz-Polyammoniumsalz-Emulsion gemäss den Ansprüchen 1 bis 3, dadurch gekennzeichnet, dass man

a) eine wässrige Lösung der Oxalsäure vorlegt,

b) zu dieser Lösung soviel Polyamin bzw. aminogruppenhaltiges Reaktionsprodukt zusetzt, wie zur Neutralisation erforderlich ist,

c) den Emulgator zusetzt und

d) das flüssige Epoxidharz unter Rühren zugibt.

5. Verwendung der Epoxidharz-Polyammoniumsalz-Emulsion nach den Ansprüchen 1 bis 3 in Epoxidharz-Mörteln.

**Claims**

1. An epoxy resin/polyammonium salt emulsion based on a liquid epoxy resin, a latent hardener, an emulsifier and water, characterised in that

a) the emulsifier is a primary aliphatic alcohol of 12 to 14 carbon atoms, an adduct thereof with up to 5 ethylene oxide groups or a carboxylic acid polyglycolester, and

b the latent hardener is the reaction product which is produced by complete neutralisation of oxalic acid with a polyamine of the formula

$$H_2N-(CH_2-CH_2-BH)-_xH$$

x being 2, 3 or 4, or with a reaction product containing amino groups and obtainable by reaction of such a polyamine with a fatty acid.

2. An epoxy resin/polyammonium salt emulsion according to claim 1, characterised in that up to 15% by weight of the oxalic acid is replaced by tartaric acid.

3. An epoxy resin/polyammonium salt emulsion according to claim 1 based on the use of a reaction product which contains amino groups and has been obtained by reaction of a polyamine of the formula

$$H_2N-(CH_2-CH_2-BH)-_xH$$

x being 2, 3 or 4, with a fatty acid, characterised in that up to 60% by weight of the oxalic acid is replaced by tartaric acid or acetic acid.

4. A process for the production of an epoxy resin/polyammonium salt emulsion according to any of claims 1 to 3, characterised in that

a) an aqueous solution of the oxalic acid is prepared initially,

b) as much polyamine and/or reaction product containing amino groups is added to this solution as is needed for neutralisation,

c) the emulsifier is introduced, and

d) the liquid epoxy resin is added with stirring.

5. The use of an epoxy resin/polyammonium salt emulsion according to any of claims 1 to 3 in epoxy resin mortars.

**Revendications**

1. Emulsion de résine d'époxyde et de sel de polyammonium, à base d'une résine d'époxyde, d'un durcisseur latent, d'un émulsifiant et d'eau, caractérisé par le fait que

a) l'émulsifiant est constitué par un alcool aliphatique primaire comportant de 12 à 14 atomes de carbone, par le produit d'addition de celui-ci avec jusqu'à 5 groupes oxyde d'éthylène ou par un ester d'acide carboxylique et de polyglycol, et

b) le durcisseur latent est constitué par le produit de réaction que l'on obtient en neutralisant complètement l'acide oxalique par une polyamine de formule:

$$H_2N-(CH_2-CH_2-BH)-_xH$$

avec x = 2, 3 et 4 ou par un produit de réaction contenant des groupes amine, qui est accessible en faisant réagir cette polyamine sur des acides gras.

2. Emulsion de résine d'époxyde et de sel de polyammonium selon la revendication 1, caractérisée par le fait que l'on remplace l'acide oxalique, jusqu'à 15% en poids, par de l'acide tartrique.

3. Emulsion de résine d'époxyde et de sel de polyammonium, à base d'un produit de réaction contenant des groupes amine que l'on obtient en faisant réagir une polyamine de formule

$$H_2N-(CH_2-CH_2-BH)-_xH$$

avec x = 2, 3 et 4 sur des acides gras selon la revendication 1, caractérisé par le fait que l'on remplace l'acide oxalique, jusqu'à 60% en poids, par de l'acide tartrique ou de l'acide acétique.

4. Procédé de préparation d'une émulsion de résine d'époxyde et de sel de poly-ammonium selon les revendications 1 à 3, caractérisée par le fait

a) qu'on place initialement une solution aqueuse de l'acide oxalique,

b) qu'on ajoute à cette solution autant de polyamine ou de produit de réaction contenant des groupes amine qu'il est nécessaire à la neutralisation,

c) qu'on ajoute l'émulsifiant, et

d) qu'on ajoute la résine d'époxyde liquide en agitant.

5. L'utilisation de l'émulsion de résine d'époxyde et de sel de poly-ammonium selon les revendications 1 à 3, dans des mortiers à la résine d'époxyde.